# NEUE EUROPÄISCHE PATENTSCHRIFT

(11) **EP 0 403 726 B2**
(45) Veröffentlichungstag und Bekanntmachung des Hinweises auf die Entscheidung über den Einspruch: **15.11.1995**
(45) Hinweis auf die Patenterteilung: 19.02.1992
(21) Anmeldenummer: 90102935.5
(22) Anmeldetag: 15.02.1990
(51) Int. Cl.: B65G 1/137, B65G 1/08

(54) **Kommissionierautomat zur automatischen Kommissionierung und Versandbereitstellung von Artikeln**
Retrieval system for the automatic selection and orderly grouping of articles
Aménagement d'entrepôt pour le ramassage automatique et la préparation de commandes ordonnées d'articles

(30) Priorität: 19.06.1989 DE 8907478 U
(43) Veröffentlichungstag der Anmeldung: 27.12.1990
(73) Patentinhaber: WILTSCHE GMBH, D-83395 Freilassing (DE)
(72) Erfinder: Wiltsche, Norbert, Dipl.-Ing., D-8228 Freilassing (DE)
(74) Vertreter: Hanke, Hilmar

(56) Entgegenhaltungen:
- EP-A- 0 213 360
- DE-A- 2 226 769
- DE-A- 2 407 756
- DE-A- 3 514 932
- DE-C- 2 935 817
- US-A- 2 283 252
- US-A- 2 799 430
- W. Fürwentsches, MÖGLICHKEITEN AUTOMATISCHER KOMMISSIONIERSYSTEME, Industrie-Anzeiger, 95. Jg., Nr. 40 vom 11.05.73

## Beschreibung

Die Erfindung betrifft einen Pharmagroßhandels-Kommissionierautomat der im Patentanspruch 1 angegebenen Art.

Kommissionierautomaten dienen zum automatischen Zusammenstellen von Warensendungen aus einer großen Artikelvielfalt in einem Warenlager (siehe Z.B. DE-A-2.226.769) oder EP 0 213 360 A1).

Folgende Merkmale sind gegeben:
- Bis zu 70 000 verschiedene Referenzen am Lager
- Auslieferung zwei- bis fünfmal täglich an jede Apotheke
- Auslieferung innerhalb möglichst kurzer Zeit ab Bestellung, die meist per Datenfernübertragung im Rechnerverbund abläuft
- 10 % der Artikel bestimmen 90 % des Umsatzes.

Vorgenannte Merkmale rechtfertigen in Lagern mit einem Umsatz von mehr als 30 000 Auftragszeilen pro Tag grundsätzlich den wirtschaftlichen Einsatz von derartigen Kommissionierautomaten, obgleich die zur Zeit auf dem Markt befindlichen Anlagen erhebliche Nachteile aufweisen:
- Der Preis pro Artikel liegt extrem hoch
- Der Flächenbedarf einschließlich Bedienallee pro Artikel beträgt über 0,1 m²
- Die Mindestkapazität pro Artikel liegt bei ca. 1,5 m Stapelhöhe bzw. Regalhöhe, die meist wegen der physikalischen Produkteigenschaften nicht genutzt werden kann und vom Umsatz her nur für wenige Prozent der Artikel gerechtfertigt ist.
- Die Nachfüllfassade besitzt eine schlechte Nutzung im Bereich von unter 50 %.
- Die Steuerung ist kompliziert und empfindlich aufgrund des asynchronen Betriebs der Ausschieber.

Das Schlüsselelement eines solchen Kommissionierautomaten ist der Ausschieber, der wegen der großen Artikelvielfalt einfach aufgebaut und extrem funktionssicher sein muß. Bekannte Ausschieber haben diverse Nachteile:
- Teuer durch Einzelantrieb
- breite und hohe Bauweise
- laut durch Verwendung von Ketten und Druckluft
- Synchronbetrieb nicht möglich wegen Einzelantrieb
- Geschwindigkeitsregelung teuer und kompliziert
- Energieversorgung aufwendig.

Aufbauend auf dem vorgenannten Stand der Technik ist es Aufgabe der Erfindung, einen Kommissionierautomaten der eingangs genannten Art zu schaffen, der sehr einfach aufgebaut ist und in Kompaktbauweise zu sehr niedrigen Kosten gefertigt und insbesondere vielseitig in unterschiedlichster Größenkonfiguration wirkungsvoll eingesetzt werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 10.

Wesen der Erfindung ist, daß bei einem Pharmagroßhandels-Kommissionierautomaten ortsfeste Ausschieber und zumindest ein ortsbeweglicher, axial verschieblicher Ausschieber vorgesehen sind, der innerhalb einer Magazinreihe (nachfolgend auch Automatenregalreihe genannt) oder eines Bereichs der Magazinreihe bei einem individuellen Automatenregal positioniert werden kann, welches eine Artikelsäule enthält.

Der Pharmagroßhandels-Kommissionierautomat kann bei einem oder mehreren Automatenregalen zwei oder mehrere Ausschieberebenen in unterschiedlicher Höhe besitzen, wobei jede Ausschieberebene einer individuellen Artikelsäule zugeordnet ist mit Rücksicht auf den Umsatz des Artikels und auf das Verhältnis von Eigengewicht zur Festigkeit der Verpackung, welches ein gewisses Maß nicht überschreiten darf, damit der zuunterstliegende Artikel von der darüberliegenden Artikelsäule nicht erdrückt wird.

Insbesondere sind leicht geneigte Automatenregalreihen Rücken an Rücken zueinander angeordnet, die im Querschnitt A-förmig ausgebildet sind und an zentraler unterer Stelle seitlich einen Antrieb besitzen, wobei achsparallele Antriebsstränge drehbar mit dem zentralen Antrieb verbunden sind. Die einzelnen Antriebsstränge liegen in den einzelnen Automatenregalreihen in den Ausschieberebenen an einer tiefgelegenen Stelle. Sie sind vorzugsweise mit einer Nut/Federverbindung ausgestattet, welche einen Drehantrieb für axial verschiebliche Ausschieber bilden, welche längs der Antriebsstränge verschieblich, jedoch drehfest angeordnet sind. Die einzelnen Ausschieber sind hierbei auf den zugeordneten Antriebssträngen abgestützt.

Längs der Antriebsstränge sind Transmissionstriebe für ortsbewegliche Ausschieber vorgesehen, vorzugsweise in Form von Zahnriementrieben, wobei die Zahnriemen mit zugeordneten Ausschiebern verbunden sind. Der Zahnriementrieb ist seinerseits durch einen Regelantrieb antreibbar, um einen Ausschieber an ein individuelles Automatenregal zu transportieren und dort zu positionieren, bevor letzteres selbst einen Artikel aus dem ausgewählten Automatenregal abführt.

Erfindungsgemäß ist mithin nicht immer für jedes einzelne Automatenregal ein Ausschieber vorgesehen, vielmehr kann für eine Automatenregalreihe bzw. einen Bereich der Automatenregalreihe ein einziger ortsbeweglicher Schieber vorgesehen sein. Dadurch ergibt sich ein besonders einfacher Aufbau eines Kommissionierautomaten mit geringen Fertigungskosten. Ein ortsbeweglicher Ausschieber ist insbesondere dann von Vorteil, wenn ein einziger zentraler Antrieb für die gesamte Anlage vorgesehen ist, wobei der Antrieb ohnehin über eine langsam drehende Längswelle erfolgt. Axial verschiebliche Ausschieber eignen sich besonders für extreme langsam drehende Antriebsstränge und insbesondere für kleine Magazinkapazitäten. Bei kleineren Magazinkapazitäten sind insbesondere Pharmagroßhandels-Kommissionierautomaten zweckmäßig, welche in mehreren übereinanderliegenden Niveaus aufgebaut sind, d.h. mehrere Ausschieberebenen besitzen.

In ein und derselben Automatenzeile können sowohl fest montierte als auch positionierbare Ausschieber gleichzeitig eingesetzt werden. Organisatorisch ist dies gerechtfertigt, da in einem Lager immer schnell drehende Artikel und langsam drehende Artikel vorkommen.

Die Erfindung wird nachfolgend anhand von Ausführungsbeispielen unter Bezugnahme auf die beigefügte Zeichnung näher erläutert; es zeigen:
Fig. 1 in schematischer Stirnansicht einen Pharmagroßhandels-Kommissionierautomaten mit Automatenregalreihen, die Rücken an Rücken zueinander nach oben hin leicht aufeinanderzu gerichtet angeordnet sind,
Fig. 2 in schematischer Seitenansicht den Pharmagroßhandels-Kommissionierautomaten nach Fig. 1,
Fig. 3 eine horizontale Schnittansicht durch den Automaten im Bereich der untersten Ausschieberebene,
Fig. 4 eine der Fig. 1 entsprechende schematische Stirnansicht eines anderen Pharmagroßhandels-Kommissionierautomaten, wobei die Antriebsstränge der einzelnen Ausschieber direkt in den Automatenregalreihen angeordnet sind,
Fig. 5 eine schematische Seitenansicht der Ausführungsform nach Fig. 4,
Fig. 6 eine horizontale Schnittansicht durch den Automaten der Fig. 4 im Bereich der untersten Ausschieberebene,
Fig. 7 einen schematischen Vertikalschnitt durch einen Ausschieber, dem oberseitig eine Artikelsäule zugeordnet ist bzw. zugeordnet werden kann und dem sich unterseitig eine weitere Artikelsäule anschließt,
Fig. 8 einen schematischen Querschnitt durch den Antrieb des Ausschiebers nach Fig. 7,
Fig. 9 einen Axialschnitt durch das angetriebene mehrteilige Zahnrad des Ausschieberantriebs nach den Fig. 7 und 8 in der Schnittebene einer Schaltklinke einer Magnetkupplung,
Fig. 10 eine Schaltkurve einschließlich Elektromagnet in einer Ansicht entsprechend der Fig. 7 und 9, und
Fig. 11 bis 14 Schaltkurve, Schaltklinke und Nachlaufsperre des angetriebenen Zahnrads des Ausschieberantriebs in aufeinanderfolgenden Schaltstellungen der Magnetkupplung.

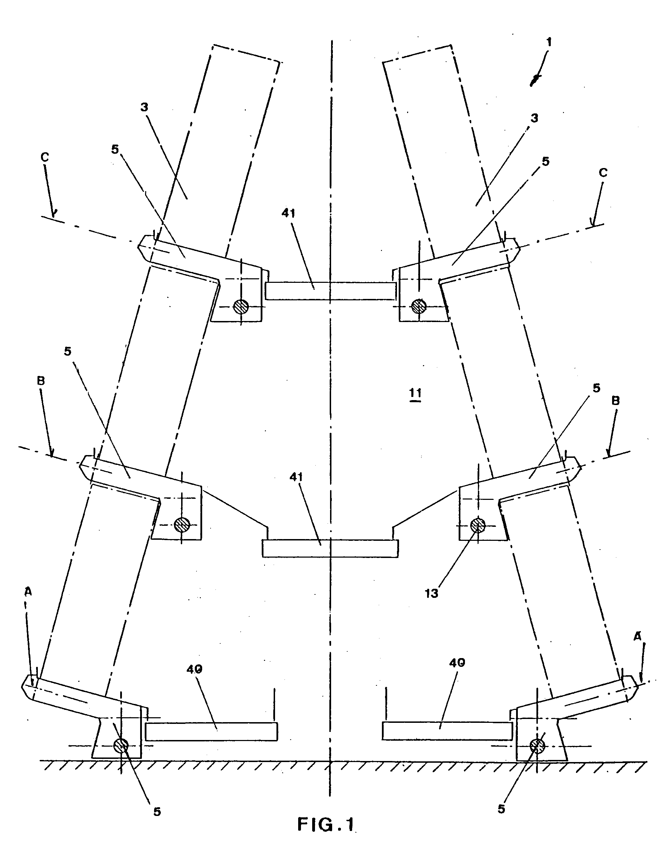

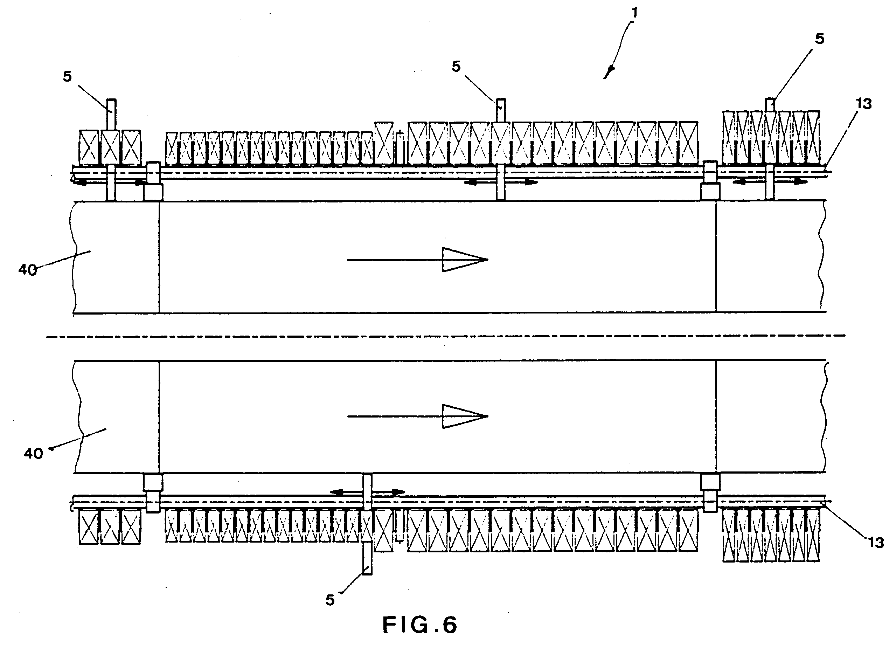

Gemäß den Fig. 1 bis 6 sind zwei Ausführungsvarianten eines Pharmagroßhandels-Kommissionierautomaten 1 zum automatischen Kommissionieren und Versandbereitstellen von Artikeln aus einem Kommissionierlager gezeigt, welches modulartig aufgebaute einzelne, in Vertikalrichtung erstreckende Automatenregale 3 besitzt, die nach oben und nach hinten leicht geneigt sind.

Die beiden Ausführungsvarianten gemäß den Fig. 1 bis 3 bzw. den Fig. 4 bis 6 unterscheiden sich in der Anordnung der Antriebsstränge 13. In der ersten Ausführungsvariante liegen die Antriebsstränge 13 hinter den zugeordneten Automatenregalreihen, während im zweiten Ausführungsbeispiel die Automatenstränge 13 direkt in den Automatenregalreihen an unterster Stelle einer jeden Ausschieberebene vorgesehen sind.

In jedem einzelnen Automatenregal 3, welches eine Bestückungshöhe von 1,50 m bis 1,75 m besitzt, kann eine einzige Artikelsäule oder können mehrere übereinanderliegende Artikelsäulen unterschiedlicher Produkte aufgenommen werden. Jeder Artikelsäule sind an unterster Stelle Ausschieber 5 zugeordnet, die gemäß den Fig. 1 bis 6 in unterschiedlichen Ausschieberebenen A, B und C liegen. Die Ausschieber 5 weisen eine schmale und flache Bauweise auf und können ortsbeweglich und auch ortsfest angeordnet sein, wie dies nachfolgend noch beschrieben wird.

Die einzelnen, in der Höhe modulartig aufgebauten Automatenregale 3 sind nebeneinander in Reihe angeordnet, wobei gemäß Ausführungsbeispiel der Fig. 1 bis 3 drei Regalmodule D, E und F hintereinander angeordnet sind.

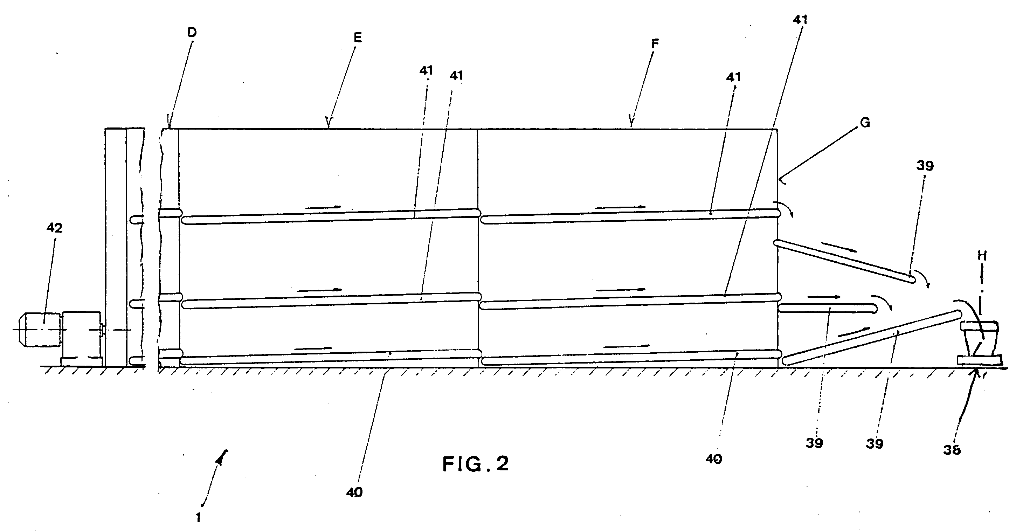

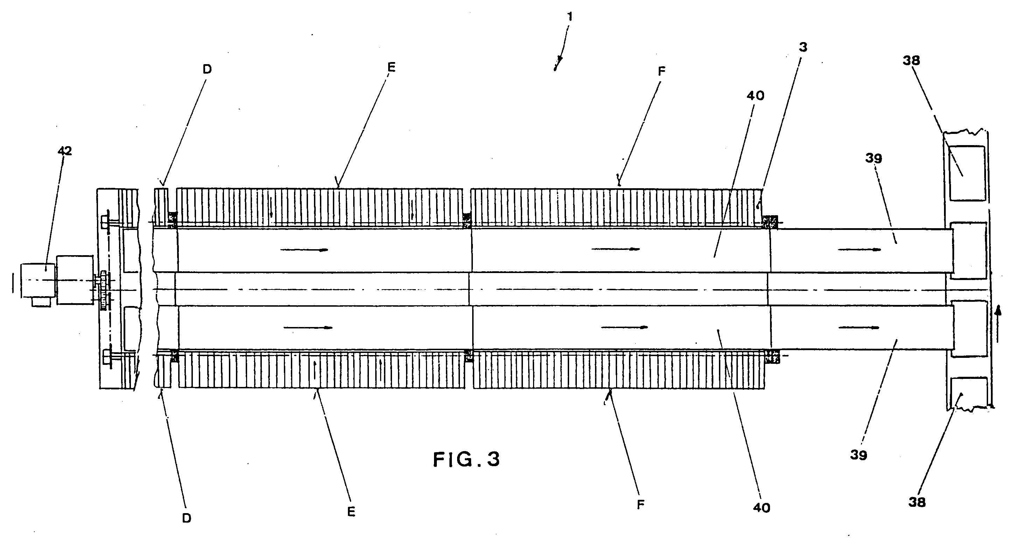

An der Rückseite 11 der Automatenregale, d.h. im Zwischenraum zwischen zwei schräg zueinander angeordneten Regalreihen sind ferner Einzelförderbänder 41 für die höheren Ausschieberebenen B und C vorgesehen sowie zwei parallel zueinander verlaufende Förderbänder 40 bei der untersten Ausschieberebene A. Die vorgenannten Förderbänder 40, 41 besitzen eine Horizontallänge in etwa der Länge eines Regalmoduls D, E und F, wie dies den Fig. 2 und 3 zu entnehmen ist, und sind leicht schräg zueinander geneigt. Sie überlappen sich im Anschlußbereich, um kommissionierte durch individuelle ortsfeste Ausschieber 5 bzw. durch ortsbewegliche Ausschieber 5 ausgestoßene Artikel an die Förderband-Endstelle G und von dort über gerade und/oder schräge Verbindungsförderbänder 39 zu einer zentralen Austragstelle H zu transportieren. An der Austragstelle H werden die kommissionierten geförderten Artikel einem vorbeigetakteten Auftragsbehälter 38 und von dort weiter zu einer Verpackungsstelle geführt.

Die einzelnen modulartig aufgebauten Automatenregale A, B und C sind miteinander fest verbunden, wie auch die einzelnen Regalmodule D, E und F fest miteinander verbunden, insbesondere verschraubt sind.

Über die gesamte Summe der Länge der einzelnen Regalmodule D, E und F erstrecken sich den einzelnen Ausschiebern 5 zugeordnete Antriebsstränge 13, die über ein Verteilergetriebe mit einem zentralen Antrieb 42 antreibend verbunden sind. Mithin wird das antreibende Drehmoment durch das Verteilergetriebe auf die einzelnen durchgehenden Antriebsstränge 13 aufgeteilt (im gezeichneten Fall je drei auf jeder Seite). Diese durchgehenden Antriebsstränge 13 drehen sich ständig und treiben über ein Getriebe die Sammelförderbänder an.

Im Bedarfsfall werden durch Betätigen spezieller Kupplungen in einzelnen ortsfesten Ausschiebern 5 diese Ausschieber betätigt bzw. deren Zahnriemen-Förderbänder 4, wie nachfolgend noch beschrieben wird. Da ein zentraler Antrieb 42 platzsparend im an sich günstigen Raum zwischen den beiden Automatenregalreihen für die gesamte Kommissionieranlage 1 vorgesehen ist, kann die Arbeitsgeschwindigkeit mit einem Frequenzumformer eingestellt werden. Anstelle von über die gesamte Summe der Regalmodule D, E und F sich erstreckende Antriebsstränge 13 können auch Antriebsstränge in der Länge der einzelnen Regalmodule D, E bzw. F vorgesehen sein, die durch feste Kupplungen miteinander verbunden sind.

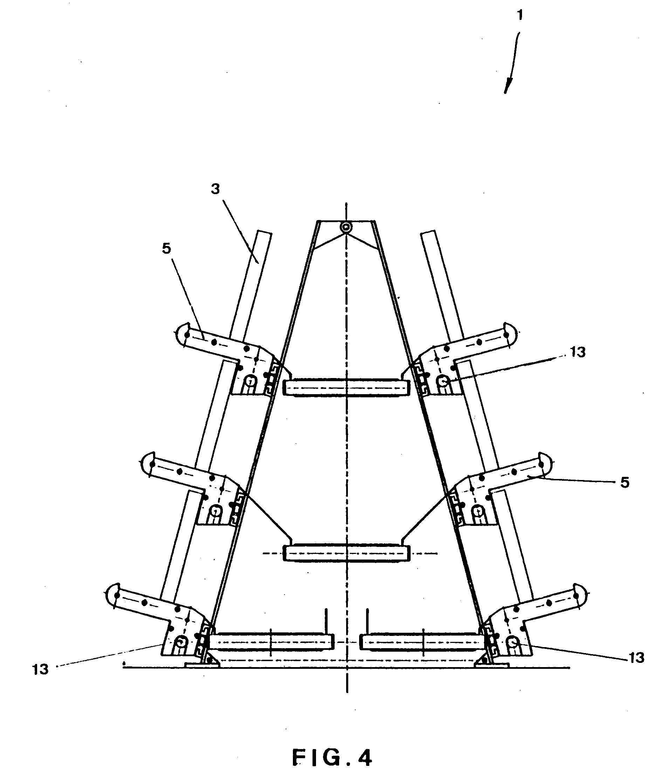

Wie insbesondere im Ausführungsbeispiel nach den Fig. 4 bis 6 veranschaulicht, können ortsbewegliche, d.h. auf den Antriebssträngen 13 axial verschiebliche Ausschieber 5 vorgesehen sein. Die ortsbeweglichen Ausschieber 5 sind nicht einem individuellen Automatenregal, sondern einer Automatenregalreihe bzw. einem Bereich der Automatenregalreihe zugeordnet und sind im Bedarfsfall bei einem individuellen Automatenregal positionierbar, um einen dort enthaltenen Artikel im Bedarfs fall abzutransportieren. Für die Transportierbarkeit der axial verschieblichen Ausschieber 5 ist insbesondere ein Transmissionstrieb in Form eines Zahnriemenantriebs 50 vorgesehen, der einem bestimmten Ausschieber 5 zugeordnet und mit diesem befestigt ist. Der Zahnriementrieb 50 wird seinerseits durch einen Regelantrieb 51 angetrieben, um den Ausschieber an die gewünschte Stelle zu positionieren.

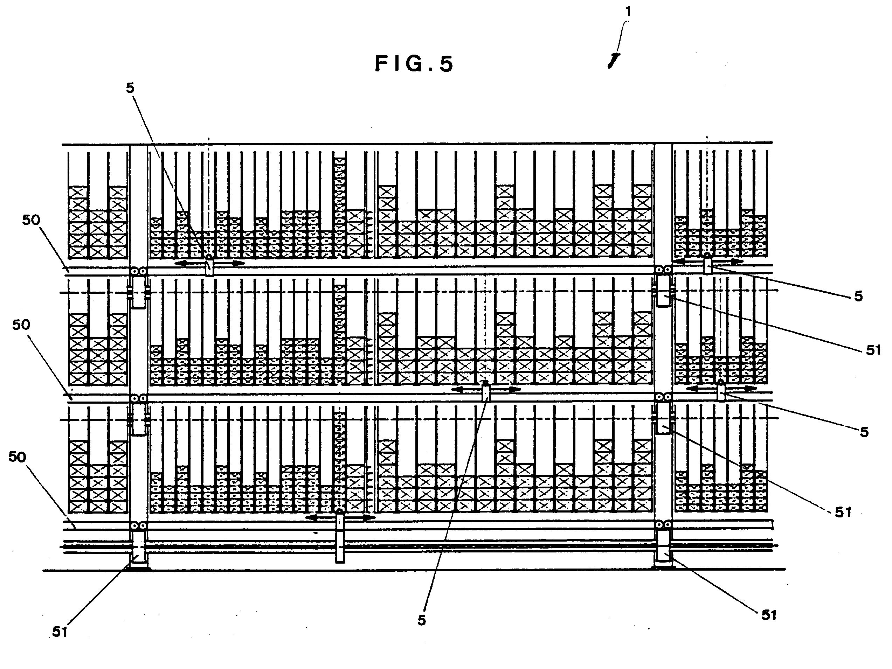

Es können die Regelantriebe mehrerer Ausschieberebenen A, B, C direkt übereinanderliegend angeordnet sein, wie dies insbesondere der Fig. 5 zu entnehmen ist. Zwei benachbarte Zahnriementriebe 50 der gleichen Ausschieberebene A, B bzw. C können als kompakte Regelantriebseinheit ausgebildet sein (vgl. Fig. 5).

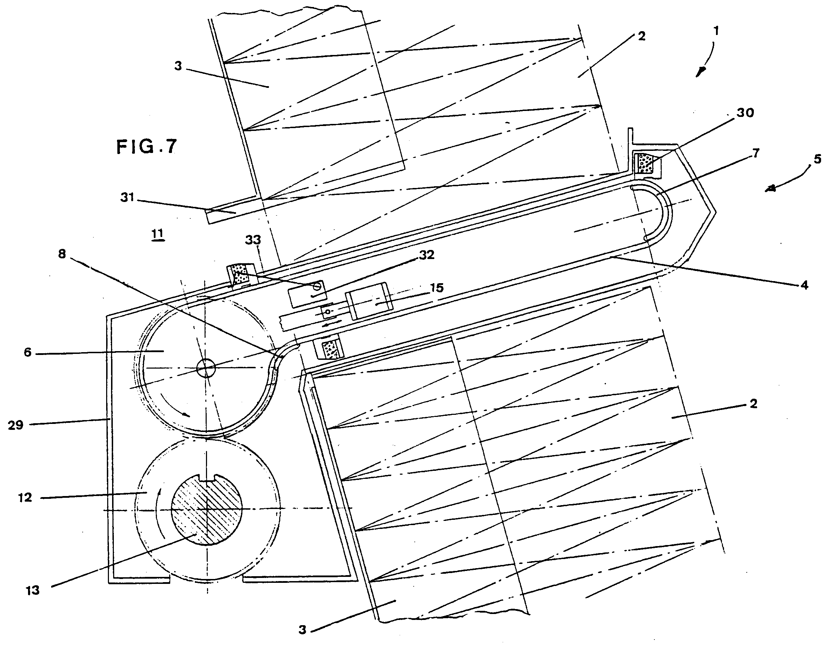

Der Ausschieber 5 besitzt ein zahnriemengetriebenes Förderband 4, welches außenseitig voneinander gleich beabstandete Ausschiebernocken 30 aufweist. Das Förderband 4 ist durch ein Zahnrad 6 gemäß Fig. 7 im Gegenuhrzeigersinn angetrieben, welches seinerseits mit einem tiefergelegenen Ritzel 12 kämmt, das auf einer langgestreckten gemeinsamen Antriebswelle 13 an entsprechender Stelle ortsfest oder axial verschieblich mittels Nut-Feder-Verbindung befestigt ist. Die Antriebswelle 13 ist durch einen zentralen Antrieb angetrieben, beispielsweise durch einen Elektromotor, der mithin alle einzelnen Ausschieber einer Kommissionieranlage 1 antreibt, wobei das Drehmoment in einem Verteilergetriebe auch auf mehrere langgestreckte Antriebswellen aufgeteilt werden kann, sofern dies die Konzeption einer größeren Kommissionieranlage 1 vorsieht. Der gemeinsame Antrieb treibt die Förderbänder an, die die ausgeschobenen kommissionierten Artikel zu einer Versandbereitstellung transportieren. Die Arbeitsgeschwindigkeit des zentralen Antriebs kann mit einem Frequenzumformer eingestellt werden.

Jeder einzelne Ausschieber 5 umfaßt ein Zahnriemen-Förderband 4 mit vorzugsweise drei Ausschiebernocken 30, die ein Dämpfungsstück aufweisen, um einen gedämpften Erstanschlag an einen auszuschiebenden Artikel an der untersten Stelle einer Artikelsäule 2 einzurichten. Das Förderband 4 besitzt insbesondere ein mit dem Zahnriemen des Förderbands 4 kämmendes angetriebenes Zahnrad 6, das deutlich größer ist als die andere nichtangetriebene Förderband-Umlenkrolle oder -schiene 7, wobei dem angetriebenen Zahnrad 6 unterseitig eine weitere Umlenkrolle oder -schiene 8 zugeordnet ist, durch die beim angetriebenen Zahnrad 6 ein Förderband-Umschlingungswinkel von nahezu 270° eingerichtet wird.

Der obere Förderbandtrum 9 verläuft parallel zum unteren Förderbandtrum 10, und es ist dem Parallelabschnitt des Förderbandes 4 oberseitig die Artikelsäule 2 des Kommissionierregals 3 zugeordnet.

Ersichtlich sind oberer und unterer Förderbandtrum 9, 10 vergleichsweise dicht voneinander beabstandet, so daß eine geringe Bauhöhe im kritischen Bereich eines Kommissionierregals eingerichtet wird. Dadurch können bei einem einzigen vertikalen, etwas schräg angeordneten Kommissionierregals Ausschieber in verschiedenen Ausschieberebenen platzsparend angeordnet werden, nicht nur an unterster Stelle, wie dies beim Stand der Technik möglich ist. Die Magazinhöhe kann bei der Erfindung für jeden Artikel in kleinen Abstufungen gewählt werden mit Rücksicht auf den Umsatz des Artikels und auf das Verhältnis von Eigengewicht zu Festigkeit der Verpackung. Dieses Verhältnis darf ein gewisses Maß nicht überschreiten, damit der zuunterst liegende Artikel von der darüberliegenden Artikelsäule nicht erdrückt wird.

Zwischen oberem und unterem Förderbandtrum 9, 10 befindet sich ein Elektromagnet 15, der eine nachfolgend noch näher beschriebene plattige Schaltkurve 16 einer Magnetkupplung, betätigt die in kompakter Bauweise im angetriebenen Zahnrad 6 angeordnet ist.

Der Ausschieber 5 befindet sich insgesamt in einem Gehäuse 29, in welchem insbesondere das durch die Antriebswelle 13 angetriebene Ritzel 12, das angetriebene Zahnrad 6, das Förderband 4, die Umlenkrollen oder -schienen 7, 8 sowie der Elektromagnet 15 angeordnet sind. Das Gehäuse 29 weist insbesondere im Bereich der Oberseite des oberen Förderbandtrums 9 eine Aussparung auf, durch die die Ausschiebernocken 30 bei einer Drehung in einen Eingriff mit einem auszuschiebenden Artikel gelangen können.

An der Rückseite 11 des Kommissionierregals 3, an welcher sich insgesamt der Antrieb des Ausschiebers 5 befindet, ist ferner ein Niederhalter 31 vorgesehen, der bei einem Ausschieben eines kommissionierten Artikels letzteren definiert einem Förderband zuführt.

Im oder am Gehäuse ist ferner ein Zählschalter 32 vorgesehen, dessen federnde Zunge 33 bei einem Ausschieben eines Artikels niedergedrückt wird und dadurch den Zählschalter 32 um einen Zählschritt betätigt.

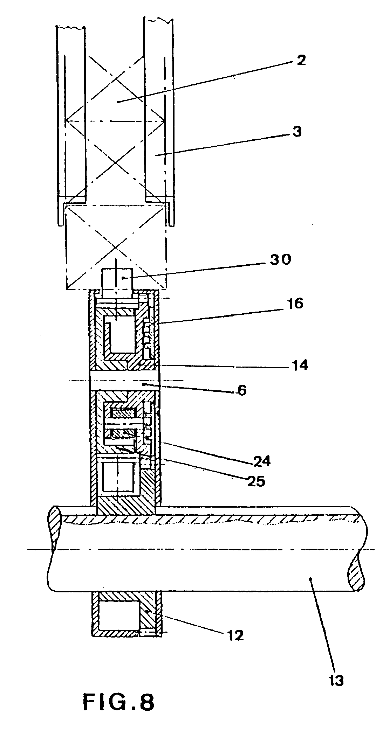

Das angetriebene Zahnrad 6 ist insbesondere entsprechend den Fig. 8 bis 14 aufgebaut und in einer kompakten sehr schmalen Bauweise ausgeführt, wie dies insbesondere der Fig. 8 zu entnehmen ist. Aufgrund der sehr schmalen Bauweise des angetriebenen Zahnrads 6 können insgesamt auch sehr schmale Ausschieber 5 realisiert werden, die nicht nur einfach in der Fertigung und sehr zuverlässig im Betrieb sind, sondern auch bei sehr schmalen Kommissionierartikeln eingesetzt werden können. Sind breitere Artikel bzw. Artikelsäulen 2 vorgegeben, so können für eine einzige Artikelsäule zwei oder mehrere Ausschieber nebeneinander angeordnet werden, die synchron gesteuert sind.

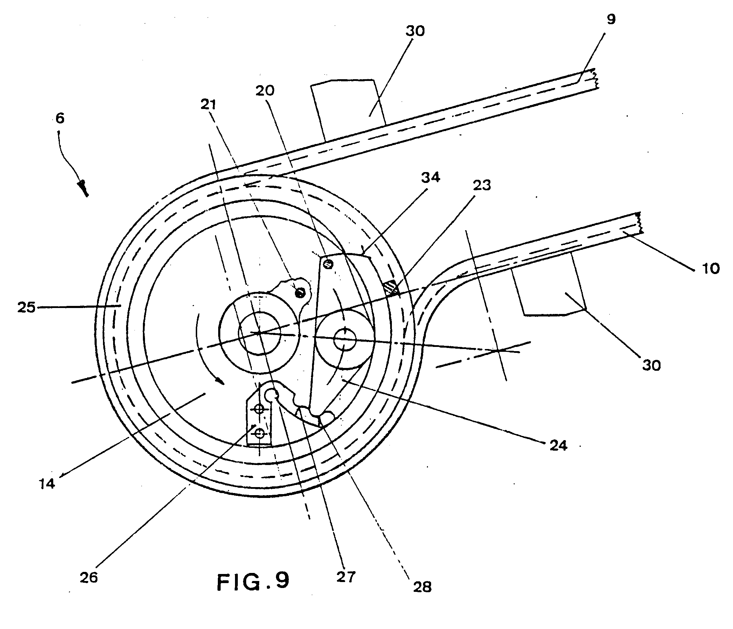

Das angetriebene Zahnrad 6 umfaßt einen ersten Zahnkranz 14, welcher mit dem angetriebenen Ritzel 12 kämmt. Ferner umfaßt das angetriebene Zahnrad 6 einen zweiten Zahnkranz 25, der mit dem Zahnriemen des Förderbandes 4 kämmt. Beide Zahnkränze 14, 25 sind über ein Kupplungsteil miteinander verbunden, der durch den Elektromagnet 15 geschaltet werden kann. Insbesondere umfaßt die Kupplung eine am ersten Zahnkranz 14 schwenkbar angelenkte Schaltklinke 24, wie dies in größerer Einzelheit in Fig. 9 dargestellt ist. Der Schaltklinke 24 ist eine gleichermaßen am ersten Zahnkranz 14 befestigte Federrast 26 zugeordnet, welche zwei Raststellungen 27, 28 besitzt, durch welche die Schaltklinke in der gerade geschalteten Stellung (Kupplung ein bzw. Kupplung aus) gehalten wird, sofern nicht gerade der Schaltvorgang durchgeführt wird. Die Schaltklinke 24 der Fig. 9 befindet sich in der Schaltstellung Kupplung aus. In der Schaltstellung Kupplung ein bewegt sich die Schaltklinke 24 gemäß Fig. 9 im Uhrzeigersinn und befindet sich dann in einem Eingriff mit dem Riegelabschnitt 34 des zweiten Zahnkranzes 25, der mit dem Zahnriemen des Förderbands 6 in Eingriff steht.

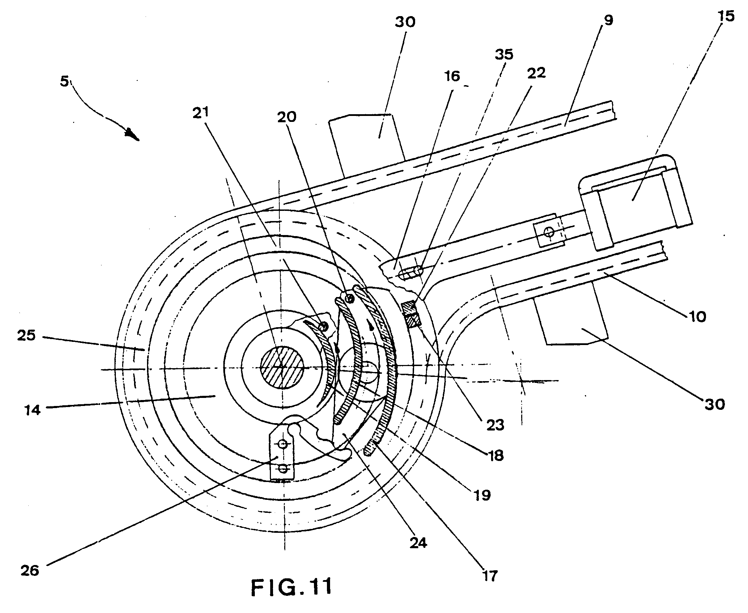

Betätigt wird die Schaltklinke durch ihren Schaltzapfen 20, der bei einer Drehung des ersten Zahnkranzes 14 im Uhrzeigersinn gegen eine Einschaltkurve 18 oder gegen eine Ausschaltkurve 17 der plattigen Schaltkurve 16 läuft, wie dies insbesondere in den Fig. 11 bis 14 gezeigt ist. Die plattige Schaltkurve 16 umfaßt ferner eine Gegenkurve 19, welche in einen Eingriff mit einem Gegenstift 21 gelangen kann, der - ähnlich dem Schaltzapfen 20 auf der Schaltklinke 24 - an radial innerer Stelle am ersten Zahnkranz 14 angeordnet ist.

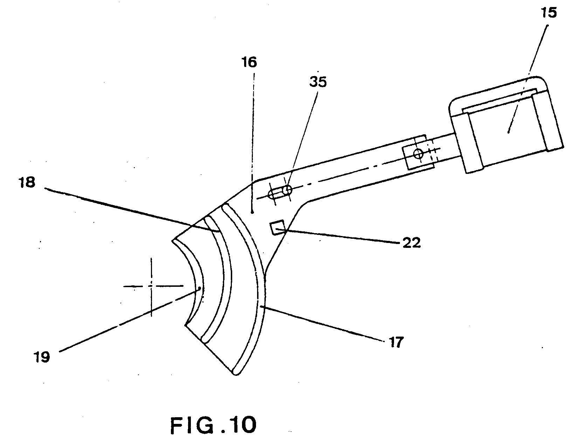

Die plattige Schaltkurve 16 weist insbesondere voneinander beabstandete sichelförmige Einzelkurven 17, 18, 19 auf, die in einer Draufsicht gemäß Fig.10 in etwa in einem Sektorbereich des angetriebenen Zahnrads 6 von ca. 90° liegen. Hierbei sind die Einzelkurven 17, 18 und 19 endseitig unterschiedlich voneinander beabstandet und rampenartig ausgebildet.

Nachfolgend wird das Schaltspiel der plattigen Schaltkurve 16 gemäß den Fig. 11 bis 14 beschrieben.

In Fig. 11 befindet sich die Schaltklinke 24 in der in Fig.9 gezeigten Stellung, d.h. in der Schaltstellung Kupplung aus. Gleichzeitig befindet sich die plattige Schaltkurve 16 in ihrer gemäß Fig. linken Endstellung, d.h. in der Schaltkurvenstellung aus. In der in Fig. 5 gezeigten Stellung des angetriebenen Zahnrades 6 kann sich mithin im Normalfall zwar die zentrale Antriebswelle 13 drehen, der Ausschieber wird jedoch nicht mitgenommen. Es dreht sich nur der innere Teil der Magnetkupplung, d.h. der erste Zahnkranz 14, auf dem sich die Schaltklinke 24 befindet. Der zweite Zahnkranz 25, der mit dem Zahnriemen des Förderbandes 4 in Eingriff steht, kann sich auch durch die Reibung nicht mitdrehen, weil dieser durch eine Nachlaufsperre in seiner Stellung festgehalten wird, insbesondere durch einen Anschlag 22 auf der plattigen Schaltkurve 16, gegen den der Stoppstift 23 eingreift, der sich auf dem zweiten Zahnkranz 25 befindet.

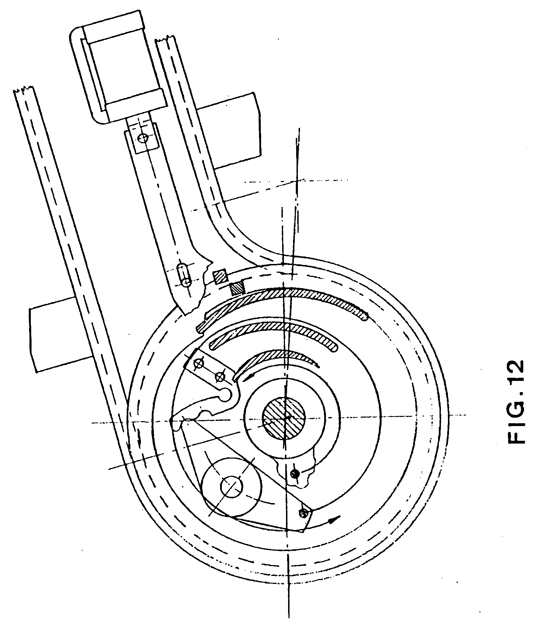

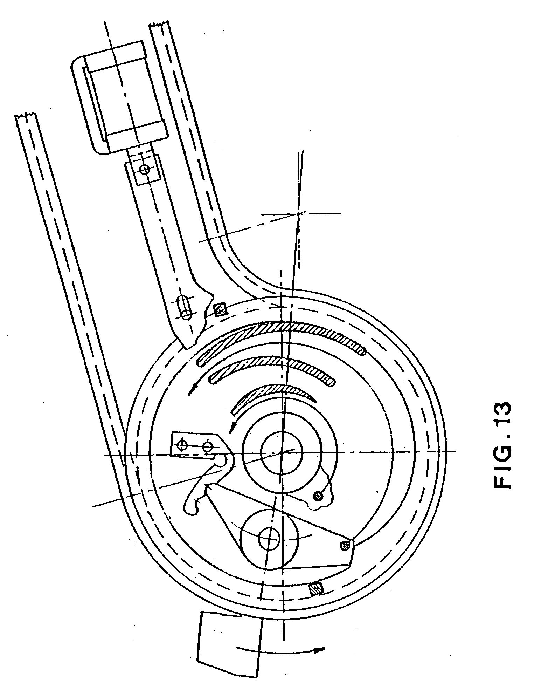

Sowie der Gegenstift 21 bei einer Drehung des ersten Zahnkranzes 14 im Gegenuhrzeigersinn aus einem Eingriff von der Außenseite der Gegenkurve 19 gelangt, kann durch Betätigung des Elektromagneten 15 die Schaltkurvenstellung "ein" gemäß Fig. 9 eingestellt werden. Dadurch wird zum einen die Nachlaufsperre 22, 23 gelöst und gleichzeitig sämtliche Einzelkurven 17, 18 und 19 der plattigen Schaltkurve 16 geringfügig gemäß Fig.12 nach rechts verschoben. Die Endstellung wird durch den Führungsstift 35 festgelegt. In dieser Schaltkurvenstellung kann nun bei einer Drehung des ersten Zahnkranzes 14 der Gegenstift 21 in einen Eingriff mit der radialen Innenseite der Gegenkurve 19 der plattigen Schaltkurve 16 gelangen. Gleichzeitig bewegt sich der Schaltzapfen 20 der Schaltklinke 24 in einen Eingriff der radialen Außenseite der mittleren Einschaltkurve 18, deren oberseitiges Austrittsende radial weiter entfernt ist vom Zentrum des angetriebenen Zahnrades 6 als das unterseitige Eintrittsende. Der Schaltzapfen 20 wird mithin rampenartig radial nach außen bewegt, und es gelangt die Schaltklinke 24 im Bereich des Schaltzapfens 20 radial nach außen und mithin in einen Eingriff mit dem Riegelbereich 34 des zweiten Zahnkranzes 25. Ein verschleißminderndes Dämpfungsglied oder ein federndes Nachgebeelement kann zwischengeschaltet sein. Die Schaltklinke 24 nimmt mithin die in Fig. 12 und 13 gezeigte Verriegelungsstellung ein. Dadurch, daß der Gegenstift 21 auf der radial inneren Seite der Gegenkurve 19 eingreifend vorbeigeleitet wird, verhindert, daß der schwache Schaltmagnet durch die Massenträgheit der Schaltklinke und durch die Haltekraft der Federrast 26 in seine ursprüngliche Stellung zurückgezogen wird.

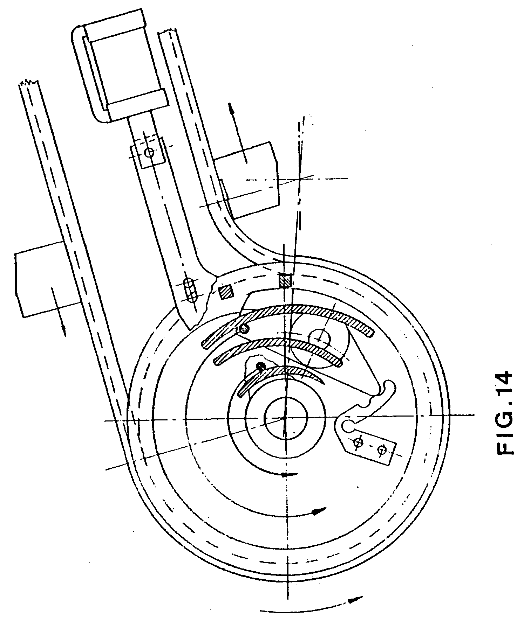

Das Ausrücken der Kupplung erfolgt analog gemäß Fig.14 . Hat der Gegenstift 21 die radiale Innenseite der Gegenkurve 19 verlassen, kann die plattige Schaltkurve 16 in die in Fig.14 gezeigte Stellung geschoben werden, in der sich die Einzelkurven 17, 18 und 19 näher am Zentrum des angetriebenen Zahnrads 6 befinden (und die Nachlaufsperre 22, 23 wieder in Betrieb genommen worden ist). Der Schaltzapfen 20 gelangt gegen die radiale Innenseite der Ausschaltkurve 17. Da das obere Ende der Ausschaltkurve 17 radial näher zum Zentrum des angetriebenen Zahnrads 6 gelegen ist als das untere Ende der Ausschaltkurve 17, erfährt die Schaltklinke 24 bezüglich des ersten Zahnkranzes 14 eine Schwenkbewegung im Gegenuhrzeigersinn, so daß die Schaltklinke 24 aus einem Eingriff des Riegelbereichs 34 des zweiten Zahnkranzes 25 gelangt. Die Schaltklinke 24 nimmt letztlich wieder die in Fig.11 gezeigte Ausgangsstellung ein. Dadurch, daß der Gegenstift 21 bei einem Schalten der Schaltklinke in ihre Lösestellung auf der radialen Außenseite der Gegenkurve 19 eingreifend geführt ist, verhindert, daß der schwache Schaltmagnet durch die Massenträgheit der Schaltklinke und durch die Haltekraft der Federrast in seine ursprüngliche Stellung zurückgezogen wird.

Ersichtlich kann das Bewegen der Schaltkurve 16 durch den Magneten immer nur dann erfolgen, wenn sich der umlaufende Gegenstift 21 nicht im Sektor der Gegenkurve 19 befindet. Dies bedeutet, daß der Magnet schon im Bereich 90 bis 360° vorher umgeschaltet werden muß, bevor die Schaltklinke 24 ein- oder ausrastet.

Da die Steuerung synchron mit der Winkelstellung der Kupplung erfolgen muß, kann auf einen Winkelschrittgeber nicht verzichtet werden. Da jedoch nur ein einziger Antrieb verwendet wird, ist der Aufwand vernachlässigbar klein.

## Patentansprüche

1. Pharmagroßhandels-Kommissionierautomat (1) zur automatischen schnellen Kommissionierung und Versandbereitstellung von Artikeln mit einem Umsatz von mehr als 30000 Auftragszeilen pro Tag aus einer großen Artikelvielfalt in einem Kommissionierlager mit im wesentlichen senkrechten, mit Artikelsäulen (2) bestückbaren, in Reihe angeordneten Magazinen (3), denen unterseitig Ausschieber (5) zugeordnet sind,
dadurch gekennzeichnet,
daß sowohl ortsfeste Ausschieber (5) als auch zumindest ein ortsbeweglicher, in Längserstreckung des Kommissionierautomaten axial verschieblicher Ausschieber (5) vorgesehen sind, der mehreren Magazinen (3) zugeordnet und bei einem individuellen dieser Magazine positionierbar ist.

2. Pharmagroßhandels-Kommissionierautomat nach Anspruch 1,
dadurch gekennzeichnet,
daß die axial verschieblichen Ausschieber (5) Magazinen (3) mit unterschiedlichen Ausschieberebenen (A,B,C) zugeordnet sind.

3. Pharmagroßhandels-Kommissionierautomat nach einem der Anspruch 1 o. 2;
dadurch gekennzeichnet,
daß zumindest zwei Magazinreihen Rücken an Rücken zueinander, in Stirnansicht A-förmig leicht zueinander geneigt, angeordnet sind, wobei zwischen den Magazinreihen jeder untersten Ausschieberebene (A) zwei parallele Förderbänder (40) für die Aufnahme der kommissionierten Artikel aus den Ausschiebern (5) und jeder höheren Ausschieberebene (B, C) ein entsprechendes Förderband (41) zugeordnet sind.

4. Pharmagroßhandels-Kommissionierautomat nach Anspruche 3;
dadurch gekennzeichnet,
daß zwischen den Magazinreihen ein zentraler Antrieb (42) für die Ausschieber (5) und die Förderbänder (40, 41) vorgesehen ist, wobei der zentrale Antrieb mit achsparallelen Antriebssträngen (13) drehbar verbunden ist, welche den einzelnen Ausschieberebenen (A, B, C) zugeordnet sind und im Bereich der Ausschieberebenen liegen (vgl. Fig. 1 und 4).

5. Pharmagroßhandels Kommissionierautomat nach Anspruch 4,
dadurch gekennzeichnet,
daß die ortsbeweglichen Ausschieber längs der Antriebsstränge (13) drehfest, jedoch verschieblich ausgebildet sind.

6. Pharmagroßhandels Kommissionierautomat nach Anspruch 5,
dadurch gekennzeichnet,
daß längs der Antriebsstränge (13) ein Transmissionstrieb für einen zugeordneten ortsbeweglichen Ausschieber (5) vorgesehen ist, wobei der Transmissionstrieb ein mit dem Ausschieber (5) verbundener Zahnriementrieb (50) ist, der durch einen Regelantrieb (51) angetrieben und positioniert werden kann (vgl. Fig. 5 und 6).

7. Pharmagroßhandels Kommissionierautomat nach Anspruch 6,
dadurch gekennzeichnet,
daß die Regelantriebe (51) mehrerer Ausschieberebenen übereinanderliegend angeordnet sind (vgl. Fig. 5).

8. Pharmagroßhandels Kommissionierautomat nach Anspruch 6 oder 7,
dadurch gekennzeichnet,
daß zwei Regelantriebe (51) horizontal benachbarter Transmissionstriebe einer Ausschieberebene (A, B bzw. C) als Regelantriebseinheit ausgebildet sind (vgl. Fig. 5).

9. Pharmagroßhandels Kommissionierautomat nach einem der Ansprüche 1 bis 8,
dadurch gekennzeichnet,
daß schmale Ausschieber (5) in Flachbauweise vorgesehen sind (vgl. Fig. 7, 8).

10. Pharmagroßhandels Kommissionierautomat nach einem der Ansprüche 3 bis 9;
dadurch gekennzeichnet,
daß im Betrieb des Kommissionierautomaten (1) der zentrale Antrieb (42) die Förderbänder (40, 41) kontinuierlich antreibt und der einem zu kommissionierende Artikel zugeordnete Ausschieber (5) über eine Magnetkupplung zuschaltbar ist (vgl. Fig. 8 bis 14).

## Claims

1. Automatic consignment device (1) for the wholesale pharmaceutical sector for automatically and quickly consigning articles, with a turnover of more than 30,000 order lines daily, from a wide variety of articles in a consignment store and placing them in readiness for dispatch, with essentially vertical magazines (3) which can be provided with article columns (2), are arranged in a row and with which expulsion members (5) are associated at the underside, characterised in that both stationary expulsion members (5) and at least one mobile expulsion member (5) are provided, which mobile member is axially displaceable over the longitudinal extent of the automatic consignment device, is associated with a plurality of magazines (3) and can be positioned at an individual one of these magazines.

2. Automatic consignment device for the wholesale pharmaceutical sector according to claim 1, characterised in that the axially displaceable expulsion members (5) are associated with magazines (3) with different expulsion member planes (A, B, C).

3. Automatic consignment device for the wholesale pharmaceutical sector according to claims 1 and 2, characterised in that at least two magazine rows are arranged back to back and, viewed from the end, slightly inclined towards one another in the form of an A, wherein between the magazine rows two parallel conveyor belts (40) for receiving the consigned article from the expulsion members (5) are associated with each bottom expulsion member plane (A) and a corresponding conveyor belt (41) is associated with each higher expulsion member plane (B, C).

4. Automatic consignment device for the wholesale pharmaceutical sector according to claim 3, characterised in that a central drive (42) for the expulsion members (5) and the conveyor belts (40, 41) is provided between the magazine rows, the central drive being rotatably connected to paraxial drive lines (13) which are associated with the individual expulsion member planes (A, B, C) and lie in the region of the expulsion member planes (cf. Figures 1 and 4).

5. Automatic consignment device for the wholesale pharmaceutical sector according to claim 4, characterised in that the mobile expulsion members are formed so as to be non-rotatable, yet displaceable along the drive lines (13).

6. Automatic consignment device for the wholesale pharmaceutical sector according to claim 5, characterised in that a transmission drive for an associated mobile expulsion member (5) is provided along the drive lines (13), the transmission drive being a toothed belt drive (50) which is connected to the expulsion member (5) and can be driven and positioned by a control drive (51) (cf. Figures 5 and 6).

7. Automatic consignment device for the wholesale pharmaceutical sector according to claim 6, characterised in that the control drives (51) of a plurality of expulsion member planes lie one above the other (cf. Figure 5).

8. Automatic consignment device for the wholesale pharmaceutical sector according to claim 6 or 7, characterised in that two control drives (51) of horizontally adjacent transmission drives of an expulsion member plane (A, B or C) are formed as a control drive unit (cf. Figure 5).

9. Automatic consignment device for the wholesale pharmaceutical sector according to one of claims 1 to 8, characterised in that narrow expulsion members (5) of a pancake design are provided (cf. Figures 7, 8).

10. Automatic consignment device for the wholesale pharmaceutical sector according to one of claims 3 to 9, characterised in that during operation of the automatic consignment device (1) the central drive (42) drives the conveyor belts (40, 41) continuously, and the expulsion member (5) associated with an article to be consigned can be switched on via a magnetic coupling (cf. Figures 8 to 14).

## Revendications

1. Système automatique (1) de préparation de commandes de commerce en gros de produits pharmaceutiques destiné à réaliser automatiquement et rapidement le rassemblement et la préparation pour l'expédition d'articles avec un volume de plus de 30.000 lignes de commande par jour, à partir d'une multiplicité d'articles situés dans un entrepôt de marchandises à expédier, comportant des magasins (3), disposés en rangées et sensiblement verticaux, qui peuvent être équipés de colonnes (2) d'articles et auxquels sont associés en bas des poussoirs (5), caractérisé en ce qu'il est prévu non seulement un poussoir (5), stationnaire, mais aussi un poussoir (5), qui est amovible et peut être déplacé axialement dans l'extension longitudinale du système automatique de préparation de commandes et qui est adjoint à plusieurs magasins (3) et peut être positionné pour l'un de ces magasins individuels.

2. Système automatique de préparation de commandes de commerce en gros de produits pharmaceutiques selon la revendication 1, caractérisé en ce que les poussoirs (5) déplaçables axialement sont adjoints à des plans de ramassage (A, B, C) différents.

3. Système automatique de préparation de commandes de commerce en gros de produits pharmaceutiques selon l'une des revendications 1 et 2, caractérisé en ce qu'au moins deux rangées de magasins sont disposées dos à dos, en étant légèrement inclinées l'une par rapport à l'autre en forme de A en vue frontale, deux bandes transporteuses parallèles (40), destinées à recueillir les articles préparés par les poussoirs (5), étant associées à chaque plan de ramassage inférieur (A) entre les rangées de magasins, une bande transporteuse correspondante (41) étant associée à chacun des plans de ramassage supérieurs (B, C).

4. Système automatique de préparation de commandes de commerce en gros de produits pharmaceutiques selon la revendication 3, caractérisé en ce qu'un dispositif d'entraînement central (42) pour les poussoirs (5) et les bandes transporteuses (40, 41) est prévu entre les rangées de magasins, le dispositif d'entraînement central étant relié en rotation à des lignes d'arbre de transmission (13), d'axes parallèles, qui sont associées aux différents plans de ramassage (A, B, C) et se trouvent dans la région des plans de ramassage (voir figures 1 et 4).

5. Système automatique de préparation de commandes de commerce en gros de produits pharmaceutiques selon la revendication 4, caractérisé en ce que les poussoirs amovibles sont solidaires en rotation, mais cependant coulissants, le long des lignes d'arbre de transmission (13).

6. Système automatique de préparation de commandes de commerce en gros de produits pharmaceutiques selon la revendication 5, caractérisé en ce qu'un dispositif de transmission est prévu le long des lignes d'arbre de transmission (13) pour un poussoir amovible (5) associé, le dispositif de transmission étant une transmission à courroie dentée (50) qui est reliée au poussoir (5) et qui peut être entraînée et positionnée par un entraînement asservi (51) (voir figures 5 et 6).

7. Système automatique de préparation de commandes de commerce en gros de produits pharmaceutiques selon la revendication 6, caractérisé en ce que les entraînements asservis (51) relatifs à plusieurs plans de ramassage sont disposés les uns au-dessus des autres (voir figure 5).

8. Système automatique de préparation de commandes de commerce en gros de produits pharmaceutiques selon la revendication 6 ou 7, caractérisé en ce que les deux entraînements asservis (51) de dispositifs de transmission horizontalement voisins d'un plan de ramassage (A, B ou C) sont réalisés sous la forme d'une unité d'entraînement asservi (voir figure 5).

9. Système automatique de préparation de commandes de commerce en gros de produits pharmaceutiques selon l'une quelconque des revendications 1 à 8, caractérisé en ce qu'il est prévu des poussoirs (5) étroits, de construction aplatie (voir figures 7, 8).

10. Système automatique de préparation de commandes de commerce en gros de produits pharmaceutiques selon l'une quelconque des revendications 3 à 9, caractérisé en ce que, pendant l'exploitation du système automatique (1) de préparation de commandes, le dispositif d'entraînement central (42) entraîne en continu les brandes transporteuses (40, 41), et le poussoir (5) associé à un article à ramasser peut être mis en marche par l'intermédiaire d'un accouplement magnétique (voir figures 8 à 14).
